# EUROPEAN PATENT SPECIFICATION

(11) **EP 2 991 889 B1**
(45) Date of publication and mention of the grant of the patent: **14.11.2018**
(21) Application number: 13883417.1
(22) Date of filing: 29.04.2013
(51) Int. Cl.: B62D 53/08, B62D 21/09, B60G 3/20, B60G 7/00, B62D 21/03

(54) **A CHASSIS COMPONENT FOR A HEAVY VEHICLE FRAME STRUCTURE AND A TRUCK OR A TRACTOR WITH SUCH A CHASSIS COMPONENT**
FAHRWERKSKOMPONENTE FÜR EINE SCHWERLASTFAHRZEUG-RAHMENSTRUKTUR SOWIE LASTKRAFTWAGEN ODER TRAKTOR MIT SOLCH EINER FAHRWERKSKOMPONENTE
COMPOSANT DE CHÂSSIS POUR STRUCTURE DE CHÂSSIS DE POIDS LOURD ET CAMION OU TRACTEUR COMPORTANT UN TEL COMPOSANT DE CHÂSSIS

(43) Date of publication of application: 09.03.2016
(73) Proprietor: Volvo Truck Corporation, 405 08 Göteborg (SE)
(72) Inventor: SVENSSON, Roland, 432 63 Bua (SE); HENDRIKS, Jan, S-426 68 Västra Frölunda (SE); ANDERSSON, Jörgen, S-438 33 Landvetter (SE)
(74) Representative: Volvo Technology Corporation
(86) International application number: PCT/SE2013/000059
(87) International publication number: WO 2014/178760

(56) References cited:
- EP-A1- 2 412 549
- WO-A1-98/29292
- WO-A2-2012/064183
- DE-B- 1 045 253
- US-A- 4 881 756
- US-A1- 2003 047 907
- US-A1- 2006 055 162
- US-A1- 2006 055 162
- US-A1- 2008 211 265
- US-B1- 6 398 262
- US-B1- 6 736 232

## Description

### FIELD OF THE INVENTION

The present invention relates to a chassis component for a heavy vehicle comprising frame structure and a load carrying structure configured for carrying a load applied to the vehicle, such as a fifth wheel, which allows for beneficial load distribution of load from the load-carrying structure to the wheels of the vehicle. The invention also relates to a truck or a tractor comprising such chassis component.

### BACKGROUND TO THE INVENTION

Heavy vehicles for hauling a trailer and trucks being provided with goods or functional units such as construction units may during travel experience different types of undesired movements from the trailer or goods or functional unit which cause undesired effects on the vehicle performance. Among these movements, rolling and vibrations are commonly discussed.

Rolling movements may cause roll-over situations for heavy vehicles. Rolling is a movement caused by dynamic rotational or side forces on the goods/trailer. It may for example arise as a result of a strong steering maneuver at high speed, at slippery road condition, or during a strong deceleration of the vehicle in a curve. Rolling may cause that the vehicle control is lost or in the worst scenario even that the whole vehicle may tip. In order to avoid such situations, the vehicle may be equipped with an electronic protection system which can warn the driver about rolling activity. Also the attention of the driver is crucial. Rolling causes a number of accidents each year.

Vibrational movements are affecting the life-time of functional components and the driver's comfort. Vibration may cause the failure of important components which may result in risks during driving. Also, it is important to reduce vibration as much as possible for the ergonomics and comfort for the driver. In order to reduce vibrations, the cab may for example be suspended with a spring type suspension.

The chassis of a heavy vehicle is generally formed by a frame structure which carries the vehicular operational parts. Vehicular components may for example be, the cab, the engine, the fuel tank, batteries, wheel suspension and any load-carrying structures for example cargo support structure, a fifth wheel, a lift etc. The chassis frame structure typically comprises two rails/beams which a spaced apart and which extend in longitudinal direction of the vehicle. The frame beams/rails are held together by transverse cross-members. Also other types of frame structures are available, such as a central frame structure, where the frame structure extends in longitudinal direction relative to the vehicle but where the two longitudinally positioned rails/beams are less spaced a part so that a there only is a small distance between the frame rails. In this case, vehicular components may not only be positioned between the frame beams, but may also be arranged on the outside of the frame structure. WO2008/075129 discloses a chassis frame for a vehicle which has two frame rails capable of receiving vehicular operational parts, which includes an axle module. The axle module is at least partly inserted within the height of the frame rail and structurally holds together two parallel frame rails. In the document, it is described that the axle module also includes a power transmission means capable of transferring a vehicle driving power to at least two driving shafts which extend from the axle module through an opening provided within the height of the frame rail. By integrating the wheel axle within the same height as the chassis frame, the cargo floor is lowered which increases the space for cargo. It is described that this increases the running behavior. However, the solution above does not improve the vibration situation in the chassis nor in the cab. Further, risk for rolling activity is still present.

According to a further state of the art document, WO 2012/064183 discloses a chassis component for a heavy vehicle according to the preamble of independent claim 1.

Therefore, there is a need in the art for finding technical solutions which minimizes the risk for rolling and which reduces the vibration level in the chassis.

### SUMMARY OF THE INVENTION

It is an object of the present invention is therefore to find a solution to the problems indicated above, and hence to increase the performance for a vehicle such as a heavy truck or tractor during driving, in particular by reducing the risk for rolling activity, finding ways of reducing vibrations in order to increase the life-time of vehicular components, and at the same time to increase the ergonomics and comfort for the driver.
This object is achieved by a chassis component exhibiting the features characterised in independent claim 1. According to a first aspect, the present invention relates to a chassis component for a heavy vehicle comprising frame structure and a load carrying structure configured for being carrying a load applied to the vehicle wherein the chassis component comprises a body, having a main portion and an upper portion provided on top of the main portion, wherein the main portion is configured for being connected to the frame structure, and wherein the upper portion of the chassis component is configured for being connected to a load carrying structure and comprises one or more connection points for connecting the upper portion to one or more spring and/or damper arrangements. Thereby, at least part of a load (F) from the load carrying structure is allowed to be distributed to a wheel via the spring and/or damper arrangements, bypassing the frame structure. The spring and/or damper arrangement may form part of an individual suspension of a rear wheel pair on the vehicle.
By the chassis component as defined above, a beneficial load distribution from the load carrying structure to the wheels is achieved. The positioning of the connection points to the load carrying structure and the spring and/or damper arrangements at a higher portion than the connection points to the frame structure are important for achieving an effective load distribution. As a result, the frame structure will be less exposed by load from the load carrying structure which has many advantages. For example, there will be less vibration distributed from the load carrying structure through the frame structure to vehicular operational parts connected to the frame structure. Thereby, it is expected that the life-time of several functional components mounted to the frame can be increased. Also the driver ergonomic situation/comfort will increase as there will be less vibration from the load-carrying structure reaching the cab. Also other types of forces, such as forces causing rolling activity is distributed in a more direct way to the wheels in the wheel pair. Since the frame rails are less exposed to these types of forces, the risk for rolling can be significantly reduced. The invention thus provides for improved safety during driving from several aspects at the same time, both reduction of risk for roll-over situations, increased life-time of components and increased ergonomics for the driver.

In embodiments of the invention, the chassis component is configured for being mounted between two longitudinal frame beams in a rear portion of the frame structure. Thereby the frame beams may support the chassis component along at least part of its side portions. At the same time, the chassis component may function as a transverse cross-member holding the frame beams together.

In embodiments of the invention, the main portion is configured to form an extension of the frame structure in its longitudinal direction when it is connected to a frame structure. Thereby, the main portion extends the frame structure and can be used as an integral part of the chassis frame structure. Also the chassis component can function as a transverse cross-member which support the frame beams.

In embodiments of the invention, the upper portion of the chassis component is formed as two or more upwards and/or outwards extending portions. Each of them are adapted for being connected to a spring and/or damper arrangement and for being connected to a load carrying structure. This has been found to be an advantageous construction in order to achieve a short load distribution path between the load-carrying structure to the connected spring and/or damper arrangements.

In embodiments of the invention, the upwards extending portions are inclined in relation to a height axis (Y). Preferably, each of the upwards extending portions are inclined outwards. This has been found to be suitable design when the load carrying structure is for example a fifth wheel.

In embodiments of the invention, the chassis component comprises a hollow space, preferable inside the main portion of the chassis component. Such hollow space can be provided with one or more functional components. Thereby, the chassis component becomes multi-functional, both providing for improved load distribution, and providing package space for functional components. Advantageously, the hollow space is configured for housing one or more functional units. For example, the hollow space may advantageously be adapted for housing at least part of a power transmission means, such as a propeller shaft, a gear box and/or a differential unit. Also, the hollow space may be used for housing a drive unit such as an electrical, hydraulic or gas engine.

In embodiments of the invention, two opposite positioned side walls of the main portion of the body is provided with holes for individual drive axles to the wheels in the wheel pair. Advantageously, a front wall of the main portion of the body is provided with a hole for a propeller shaft. Thereby the chassis component is suitable for housing a differential unit.

In embodiments of the invention, a rear wall of the main portion of the body is provided with a hole for a propeller shaft. This may for example be the case where a gear box is arranged on the rear side of the chassis component. Hence, the rear wall of the main portion may comprise connection points for a gear box. The rear wall of chassis component may also comprise an additional hole so that a transmission axle which exits the gear box can extend back into the chassis component. This arrangement allows for new possibilities of packaging of vehicular components inside the chassis of the vehicle. Alternatively, it is also possible to arrange a gear box on the front wall of the main portion. Then the power exiting the gear box can be directly transferred to a differential unit housed inside the chassis component.

In embodiments of the invention, the main portion, preferably two opposite positioned side walls of the main portion, each comprise connection points for at least one wheel suspension rod, for example two rods having a V-shaped configuration arranged on the two opposite positioned side walls of the main portion. Also the upper portions may each comprise connection points for one or more wheel suspension and/or wheel alignment rod, for example two rods having a V-shaped configuration arranged on each upper portion of the chassis component. Further, the main portion and/or the upper portion may comprise connection points suitable for connecting a toe-link. The chassis component may hence function as a complete suspension component for connecting the wheels to the chassis.

In embodiments of the invention, the main portion is formed as one body, and the upper portion(s) is/are connected by one or more connecting elements to the main portion. In other embodiments of the invention, it may be preferable to use a chassis component which is made as one integral unit comprising both a main portion and an upper portion.

A second aspect of the invention relates to a truck comprising a chassis component as defined above. By arranging the chassis component on a truck, the beneficial load distribution allows for reduced vibrations and rolling activity, therefore providing both improved comfort for the driver and improved safety during driving.

A third aspect of the invention relates to a tractor for a tractor-trailer combination comprising the chassis component. By arranging the chassis component on a tractor for a tractor-trailer combination, for example for a tractor provided with a fifth wheel, the beneficial load distribution allows for reduced vibrations and rolling activity, therefore providing both improved comfort for the driver and improved safety during driving.

The chassis component can be applied in many other different kinds of heavy vehicles, i.e. vehicles having a total weight of above 3500 kg. For example, the chassis component can be used in on-road and off-road load carrying trucks and trailers, rescue vehicles, construction vehicles, and buses.

### BRIEF DESCRIPTION OF THE DRAWINGS

The invention will be described in the following with reference to embodiments illustrated on the enclosed drawings, on which:
Fig. 1a shows a vehicle, here exemplified by a heavy tractor for a tractor-trailer combination comprising a fifth wheel as load carrying structure and a chassis component according to a first embodiment of the invention.
Fig. 1b is a perspective front view of the chassis component of the first embodiment of the invention in mounted position in the vehicle.
Fig. 2a shows a rear portion of a vehicle comprising a chassis component according to a second embodiment of the invention.
Fig. 2b is a planar rear view of the chassis component of the second embodiment.
Fig. 2c is a perspective front view of the chassis component of the second embodiment in mounted position in the vehicle.
Fig. 2d is a perspective rear view of the chassis component of the second embodiment in mounted position in the a vehicle.
Fig. 3 shows a vehicle comprising the chassis component, where the vehicle comprises a support structure for goods as load carrying structure.
Fig. 4 shows a vehicle comprising the chassis component, where the vehicle comprises a lift device as load carrying structure.
Fig. 5 shows a vehicle comprising the chassis component, where the vehicle comprises a lift device as load carrying structure and is provided with a leaf spring.

### DETAILED DESCRIPTION

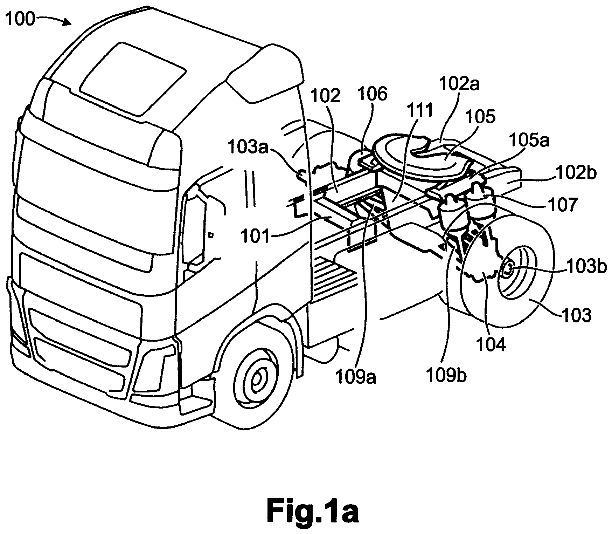

Fig. 1a depicts a chassis component 111 according to a first embodiment of the invention in mounted position in a heavy vehicle 100. The chassis component according to the invention is suitable for any heavy vehicle comprising a load carrying structure applied to the vehicle and at least one wheel pair being suspended by individual/independent wheel suspension. In Fig. 1a, the heavy vehicle is exemplified by a tractor 100 for hauling a trailer. The vehicle 100 comprises a frame structure 102 extending in a longitudinal direction of the vehicle.

The frame structure 102 comprises two elongated frame beams 102a, 102b, which are spaced apart from each other and extend along the length direction of the vehicle. Each of the frame beams 102a and 102b may have a U-profile cross-section. The frame beams 102a and 102b are connected to each other by cross-member frame beams 101 which are positioned in transverse direction relative to the longitudinal frame beams. Alternatively, the frame structure 102 may be centrally positioned with a smaller distance between the longitudinal beams than traditionally.

The vehicle 100 is provided with an individual wheel suspension 104 for a wheel pair 103. The individual wheel suspension 104 comprises individual drive axles 109a and 109b for rotating each of the first and second wheels 103a and 103b. The individual wheel suspension 104 allows for that the wheels 103a and 103b can move vertically independent from each other. The individual/independent wheel suspension 104 also comprises spring and/or damper arrangements 106 and 107 which each are used as suspension elements for one of the wheels 103a and 103b respectively. The spring and/or damper arrangements 106 and 107 are connected one to each of the wheels 103a, 103b and controls the vertical movement and load capacity on the wheels. Hence, when one wheel is driving over a bump, the opposite positioned wheel of the wheel pair is not significantly influenced by the vertical movement of the wheel exposed to the bump. Therefore, the opposite positioned wheel is having increased contact to the ground compared to using a rigid axle suspension arrangement where the wheels in a wheel pair are connected by a rigid axle. Preferably, the drive axles are also pivotally arranged to the wheels 103a and 103b so that the wheels can move vertically without being tilted. The wheels 103a and 103b are members of the same wheel pair 103, wherein the wheels are positioned on the opposite side of the vehicle at the same length distance from the front. In this embodiment, the wheel pair is a rear wheel pair, hence the wheel pair is located behind the front wheel pair of the vehicle.

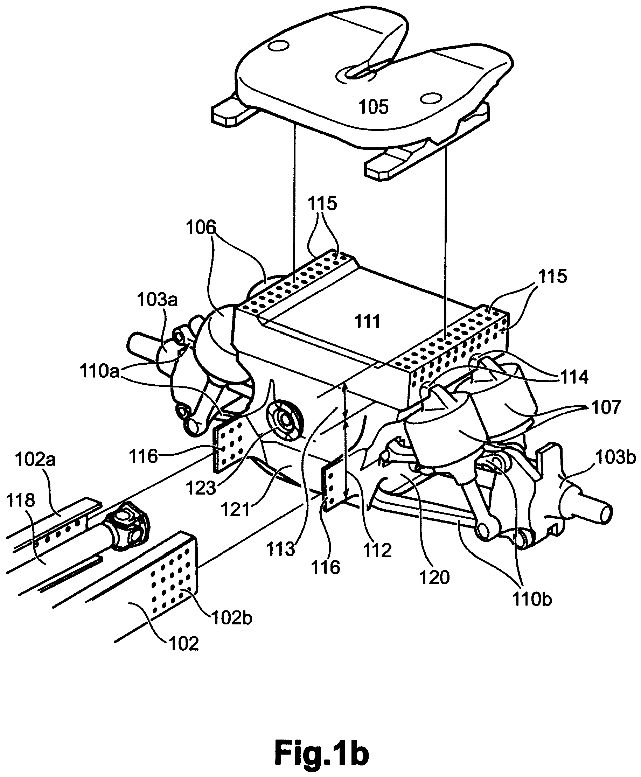

The spring and/or damper arrangements 106 and 107 may be a spring element alone or a damper unit alone. Preferably, the arrangements may comprise both a spring and a damper component which are either positioned spaced apart or present as an integrated unit being a combination of a spring and a damper. The spring function may be obtained by using for example an air spring, a gas spring, a hydraulic spring, a coil spring, a rubber spring and/or a leaf spring. Alternatively, or additionally, the arrangement 106 may include a damper for example an air damper, a gas damper, a hydraulic damper and/or a rubber damper. In the embodiment illustrated in Fig. 1a and 1b, the spring and/or damper arrangement 106 and 107 are in the form of a combined unit, in which an air bellow which is situated on top of a hydraulic damper.

A load carrying structure 105 configured for carrying a load applied to the vehicle is arranged on the chassis component 111. The load carrying structure 105 is configured for carrying a load applied to the vehicle. In Fig. 1a and 1b the load carrying structure 105 is illustrated by a fifth wheel 105 and a fifth wheel holder 105a. However, the load carrying structure 105 may also be a goods supporting structure, a box for goods, a container, a swap body, an on-built console structure or an on-built functional unit. For example, the load carrying structure may be an on-built centrally positioned member for example a console structure for functional equipment, i.e. a crane, a lift, a digger, or a concrete mixer. Also, the load carrying structure 105 may be an on-built support structure for goods for example a support structure for timber. As used herein, the term "load carrying structure" does not include the longitudinal frame beams 102a and 102b.

The chassis component 111 is arranged within the frame structure 102 of the vehicle 100. The chassis component 111 is arranged at an end portion of the frame structure 102 and is connected to both the frame beams 102a and 102b and thereby functions as transverse cross-member of the frame structure 102. The end portion of the chassis herein refers to a portion at the rear part of the vehicle, for example situated at any position of the second half of the chassis of the vehicle. The chassis component 111 is arranged essentially between the first and the second wheels 103a and 103b and is connected to the frame structure 102.

Fig. 1b shows the chassis component 111 according to the first embodiment of the invention in more detail. (In Fig. 1b the wheels 103a and 103b are illustrated by its wheel hubs without showing its tires). The chassis component 111 comprises a main portion 112 and an upper portion 113 arranged on top of the main portion 112. The chassis component 111 is arranged essentially between the first and the second wheels 103a and 103b and is connected to the frame structure 102.

The main portion 112 is constructed for being connected to an end portion of the vehicle frame structure 102. Hence the dimensions are chosen to fit with the frame structure and connection points 116, are arranged on the chassis component for fixing it to the frame structure 102. Hence, the main portion 112 of the chassis component 111 is to be connected to the frame structure 102. Preferably, the main portion 112 is connected to an end portion of the frame structure 102. Thereby, the chassis component 111 may also function as an extension of the frame structure 102. Alternatively the main portion 112 may be provided between the longitudinal frame beams 102a and 102b, thereby functioning as a transverse frame cross-member connecting the two longitudinal frame beams 102a and 102b. Hence, the chassis component may function as an integral part of the frame structure 102.

The upper portion 113 of the chassis component 111 is arranged above the main portion 112 which main portion comprises the attachment points 116 for the frame structure. In other words, the upper portion 113 is arranged on a top surface of the main portion or an upper part of the side walls 120 of the chassis component 111, where the upper part 113 is located at a height above the connection points to the frame structure 102.

The upper portion 113 is constructed for being connected to the load carrying structure 105 and constructed for being connected to the spring and/or damper arrangements 106 and 107. The spring and/or damper arrangements 106 and 107 are therefore in indirect contact with the load carrying structure 105 via the upper portion 113. Hence, the upper portion 113 may comprise connection points 115 for connecting a load carrying structure 105 or a support structure 105a for a load carrying structure 105 to the chassis component 111. The upper portion 113 also comprises one or more connection points 114 for connecting the upper portion 113 to one or more spring and/or damper arrangements 106, 107. The connection points 114 may for example be connection elements for pivotal joints for the spring and/or damper arrangements 106 and 107.

Therefore, the upper portion 113 can form a load distribution path from the load carrying structure 105 to the spring and/or damper arrangements 106, 107.

The upper portion 113 is located above the main portion 112 in height direction of the vehicle (Y-axis). This results in that the load carrying structure 105 and the connection points 114 for the spring and/or damper arrangements 106 and 107 are located above the connection point 116 for the frame structure 102. Therefore, load is distributed from the load carrying structure 105 to the wheels 103 with a minimum load distribution via the frame structure 102. Hence, the load is distributed from the load carrying structure 105 through the spring and/or damper arrangements via the upper portion of the chassis component and thereafter to the wheels. In this way, significant part of load from the load carrying structure is distributed to the wheels without being distributed though the frame. The chassis component thereby can take care of both stationary forces and dynamic forces so that the frame structure is less exposed to load impact.

Stationary load (F) from the load carrying structure 105 as used herein means load which is distributed to the wheels when the vehicle does not move. The amount of stationary load acting on each of the wheels of the vehicle depends on where along the vehicle the load carrying structure 105 is positioned. An important parameter when considering the stationary load distribution is therefore the wheel base length i.e. the length between the front wheel pair and the next (second) wheel pair. For example, for a tractor having a wheel base length X and a fifth wheel positioned at a distance10% of X from the second wheel pair (the rear wheel pair), the load F acting on the fifth wheel and being distributed to the second wheel pair can roughly be approximated as being 100%-10% of the total load of the fifth wheel. The load on the front wheel pair can hence be estimated as around 10% of the total load on the fifth wheel. Hence, for a vehicle according to the invention, it may be envisaged that the more close to the longitudinal position of the wheel pair 103a, 103b the load carrying structure 105 is positioned, the more advantageous load distribution is achieved when considering avoiding the load being transferred through the frame structure 102.

Dynamic load distribution is herein defined as load that is distributed when the vehicle or load carrying structure is moving, for example rolling activity and vibrations. By connecting the upper end of the spring and/or damper arrangement in an individual wheel suspension, not to the frame structure, but indirectly to the load carrying structure via the chassis component, rolling forces can be mitigated in a more direct and efficient way. Advantageously, the connection points for the load carrying structure may be arranged so that the outer edges of the load carrying structure are connected to the chassis component. Preferably, the connection points for the spring and/or damper arrangements 106 and 107 may be arranged at the same height or below the connection elements 115. It is also preferred that the contact points 114 and 115 are arranged with a small distance from each other. The upper portion 113 may be constructed in different ways depending on the type of load carrying structure. However, an even improved inhibition of rolling can be achieved by arranging the connection points 114 with a short distance from the connection points 115 for the load carrying structure 105, for example a distance of less than 0.3 m, for example at a distance of less than 0.2 m, preferably a distance of less than 0.1 m. Thereby, an even more reduced force distribution through the frame structure through is achieved.

It has been found that the impact of dynamic forces can be significantly reduced. An advantage with using the chassis component as defined in claim 1, an improvement of anti-roll effect is achieved. Distribution of vibrations through the frame structure 102 can also be significantly reduced according to the invention. Thereby, prolonged life time of a number of components is expected. Also the driver will experience higher driver comfort as the vibrations distributed from the load carryings structure via the frame structure to the cab is significantly reduced.

The chassis component 111 may be at least partly hollow and function for example as housing for a differential unit. In this way, the differential unit is arranged within the chassis component 111. The chassis component 111 comprises two vertical side surfaces 120 which are positioned in a direction extending along a longitudinal direction of the vehicle and which are provided with holes for the drive axles 109a and 109b for the wheels 103a and 103b respectively. The drive axles are pivotally attached to the differential unit and to the wheel 103a so that the wheel 103a is allowed to move in vertical direction without influencing the ground contact of wheel 103b. In this embodiment, a front wall 121 of the main portion 112 of the chassis component 111 is provided with a hole 123 for the propeller shaft.

Wheel suspension rods 110a and 110b may be arranged between the chassis component 111 and the wheels 103a and 103b. Alternatively, the wheel suspension rods 110a and 110b may also be connected to other parts of the chassis for example the frame structure 102. The amount of wheel suspension rods and suitable positioning of these will depend on the specific application of the invention. According to the first embodiment of the invention, three wheel suspension rods 110a and 110b are used for each of the wheels 103a and 103b, including two V-shaped rods and a toe-link rod provided at each of the wheels 103a and 103b. The wheel suspension rods 110a and 110b are arranged between the wheels and the chassis component 111.

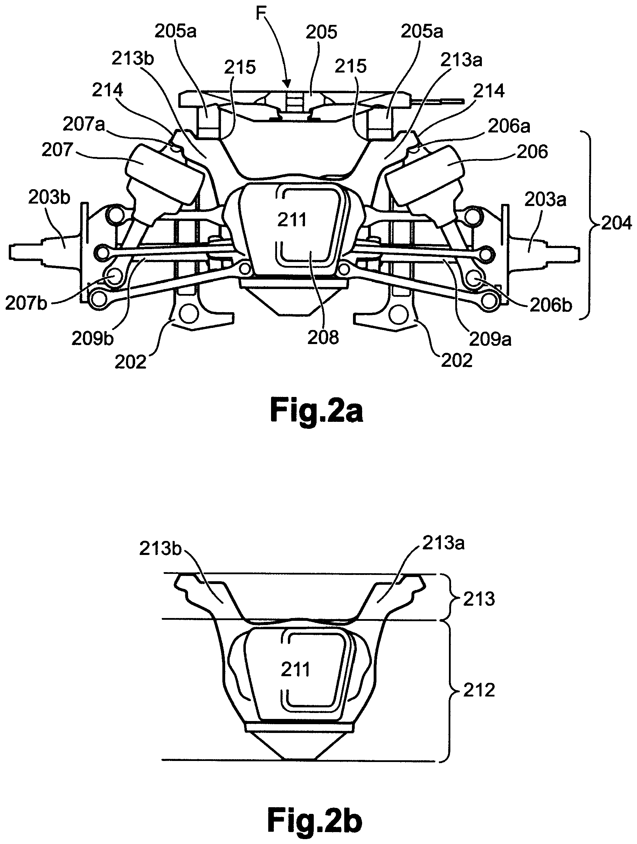

Fig. 2a-d schematically depicts selected parts of a heavy vehicle 200 according to a second embodiment of the invention. This embodiment is built on several common concepts as the first embodiment. For example, the chassis component 211 is similar to the first embodiment in that it comprises a main portion 212 and an upper portion 213 arranged on top of the main portion 212, see Fig. 2b. The main portion 212 is configured for being connected to an end portion of the frame structure 202 and the upper portion 213 is configured for being connected to a load carrying structure 205. The upper portion 213 may comprise one or more connection points 214 for connecting the upper portion 213 to one or more spring and/or damper arrangements 206, 207. Thereby, at least part of a load (F) from the load carrying structure 205 is allowed to be distributed to a wheel 203a, 203b via the spring and/or damper arrangements 206, 207 bypassing the frame structure 202.

A difference between the first and second embodiment is that an even more optimized load distribution can be achieved since the upper portion 213 of the chassis component 211 is arranged as two or more upwards and outwards extending portions 213a, 213b. The portions may be manufactured separately and mounted to the main portion 212 of the chassis component or may be formed as an integral part of the chassis component for example by using casting.

At least one portion 213a and one portion 213b is positioned on each side of the main portion 212. The portions 213a and 213b are arranged on an upper part of the main portion 212, such as on top of the main portion 212 at two opposite positioned outer parts on top of the main portion 112. Connection points 214 for the spring and/or damper arrangements 206 and 207 are arranged on each upper portion 213a and 213b. Also each upper portion comprise connection points for the load carrying structure or the support structure for the load carrying structure 205a.In this way, load from the load carrying structure 205 can be efficiently transported to the spring and/or damper arrangements 206 and 207, while the load distribution through the frame structure 202 is minimized. The portions may extend upwards or outwards from the chassis component 211. Preferably the upper portions 213 extend both upwards and outwards from the chassis component 211 in an inclined angle in relation to a height axis (Y).

The chassis component may comprise additional portions 213a and 213b, for example two portions 213a and two portions 213b.The upwards extending portions 213a and 213b may each comprise connection points 214 for at least one or more spring/and or damper arrangements 206 and 207 and comprise connection points 215 for the load-carrying structure 205 or support structure 205a.

Since the spring and/or damper arrangements 206 are to be mounted between the respective neighboring wheel 103a or 103b and the respective neighboring upper portion 213a or 213b of the chassis component 211, a V-shaped load distribution path can be formed where the spring/damper arrangement represents one leg ("leg A") and the upper portion represents another leg ("leg B") of the V-shape. Two V- shaped structures are thereby formed, one on each side of the chassis component 211, which sides are located parallel to the length the vehicle. The load carrying structure hence can rest on the top of each "tip" in the V-shaped structure. Therefore, the force from the load carrying structure will either be distributed through the leg A or the leg B. Hence, force distributed through the leg B will be transported to the frame structure without passing the frame structure.

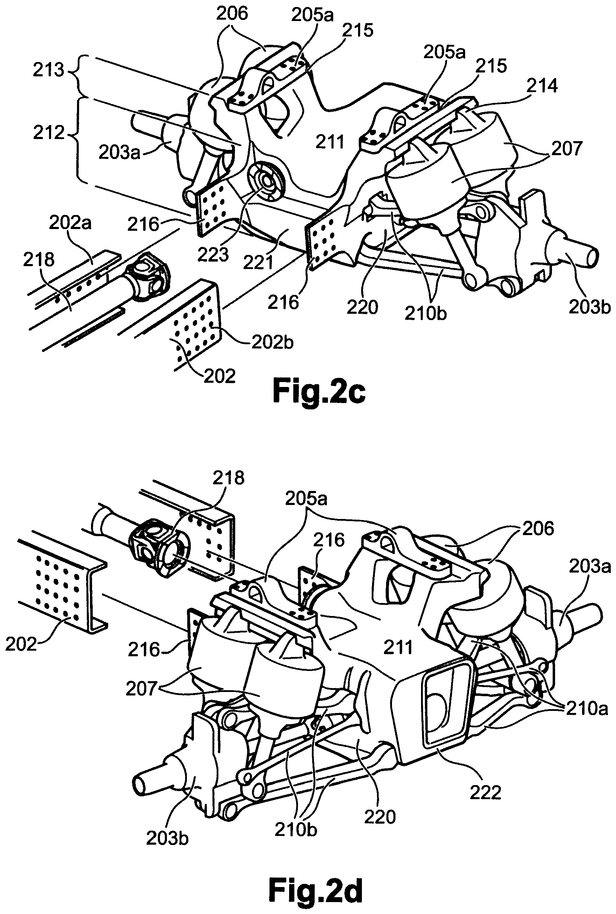

Fig. 2c and d depicts the chassis component 211 according to the second embodiment in more detail, especially with regards to how the chassis component 205 is connected to relevant components, such as the suspension components 206 and 207 and 210a and 210b for a rear wheel pair 103 and the connection points 216 of the frame structure.

As seen in Fig. 2c, the connection points 214 for the spring and/or damper arrangements 206 and 207 and connection points 215 are provided for the load carrying structure 205. The connection points 214 and 215 are both located on the upper portion 213 of the chassis component 211. The connection points 214 may for example comprise be connection elements for pivotal joints. The connection points 214, 215 may be arranged on longitudinally positioned outer edges of the upper portion 213. The spring and/or damper arrangements 206 and 207 may be arranged at two opposite outer sides of the upper portion 213. The first end (upper portion) 206a and 207a of the spring and/or damper arrangements 206 and 207 are connected indirectly to the load-carrying structure 205 via upper portion 213 of the chassis component 211. The second end (lower portion) 206b and 207b of the spring and/or damper arrangements 206 and 207 may be directly or indirectly connected to the wheel hub or to a wheel suspension rod located close to the wheel hub 203a and 203b.

Two spring and/or damper arrangements 206 and 207 can be arranged at each side of the load carrying structure 205. Several types of spring and/or damper arrangements having either a spring function or a damping function or a combination of both can be used for the chassis component. The amount and type of spring and/or damper arrangements may vary depending on the technical application. For a fifth wheel it may be useful to use two spring and/or damper arrangements 206 and 207 at each side of the load carrying structure 205. The spring and/or damper arrangements 206 and 207 are preferably air-bellows arranged on top of hydraulic dampers.

The connection points 216 for connecting the chassis component 211 to the frame structure 202 are located at the main portion 212 of the chassis component 211. The positioning of the connection points 216 on the main portion may be varied. Since the upper portion 213 is arranged at a higher position than the main portion 212 comprising the frame connection points, load (F) acting on the load carrying structure 205 is mainly distributed though the fifth wheel holder 205a to the spring and/or damper arrangements 206 and 207 via the upper portion 213.

Fig. 2c illustrates the chassis component according to the second embodiment from the rear where the connected suspension rods 210a and 210b can be seen in more detail. The amount of wheel suspension rods and suitable positioning of these will depend on the specific technical application such as the type of individual wheel suspension and the load capacity and expected service conditions of the vehicle. In the second embodiment of the invention, the same amount and type of suspension rods 210a and 210b are used as in the first described embodiment.

The chassis component 111 and 211 according to the invention may have supplementary technical functions. For example, the chassis component may be at least partly hollow and function as housing for one or more functional unit such as a differential unit or a gear unit. Also other functional units may be partly or completely housed by the chassis component 111, for example a full gear box may be present in the chassis component 111 and 211. Alternatively, at least part of a gear unit may be housed inside the chassis component 111 and 211, preferably in the main portion 112 and 212 of the chassis component. In some embodiments of the invention, a full gear box is housed inside the chassis component 111 and 211. Alternatively, a functional unit for example a gear unit may be connected to the chassis component 111 and 211. The gear unit may be connected to the front or the rear part of the chassis component. If a gear box is connected on the rear side of the chassis component, both the front and rear wall 221 and 222 of the main portion will be provided with a hole 123 for a propeller shaft 218. If a gear box is positioned inside the chassis component 111 and 211 and the wheels 103a and 103b, 203a and 203b are part of a rear wheel pair, the front surface 221 of the chassis component is provided with the hole for the propeller shaft, see Fig. 2c. Hence, the front surface and/or the rear surface of the chassis component may be provided with connection points for a functional unit. Also, the hollow space may be used for housing a drive unit such as an electrical, hydraulic or gas engine.

The chassis component 111 and 211 according to the invention can advantageously be more rigid than the frame structure 102 and 202 in a transverse direction relative to the length of the vehicle. The stiffness of the chassis component 111 and 211 may be at least two times higher than the stiffness of the frame structure 102 and 202, more preferably where the stiffness is more than 10 times higher than the stiffness of the frame structure in a transverse direction relative to the length of the vehicle. For example, the stiffness of the chassis component 111 and 211 is at least two times higher, more preferably the stiffness is more than 10 times higher than the stiffness of the frame structure in a transverse direction relative to the length of the vehicle. The chassis component 111 and 211 may be a casted iron component formed as one body. Alternatively the main portion 112, 212 and the upper portion 113, 213 may be constructed separately and thereafter the upper portion 113 or portions 213a and 213b are connected to the main portion 112.

The chassis component 111 and 211 according to the invention is suitable for different types of load carrying structures. The load carrying structures 105 in Fig. 1 and Fig. 2 are illustrated by a fifth wheel 105 and 205 and a fifth wheel holder 105a and 205a. However, the load carrying structure may also be of other types as described and exemplified above. In order to illustrate that the invention is not limited to only tractors having a fifth wheel (as shown in Fig. 1 and 2), the following additional embodiments of the invention are mentioned.

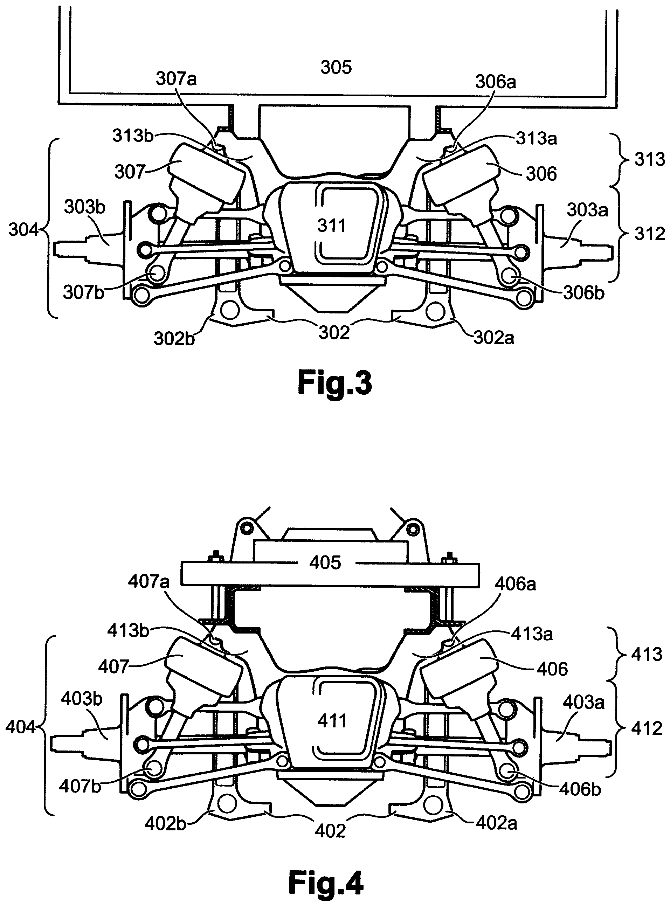

Fig. 3 shows a rear portion of a truck having a cargo supporting structure as load carrying structure 305 arranged on top of the upper portions 313a and 313b of a chassis component 311 according to an embodiment of the invention. As can be seen in the Fig. 3, the spring and/or damper arrangement 306 and 307 are connected to the load carrying structure 305 via the upper portions 313a and 313b of the chassis component 311. Further, the spring and/or damper arrangement 306 and 307 are connected to the wheel hubs 303a and 303b. The main portion 312 of the chassis component 311 is connected to the frame beams 302a and 302b. Hence, the spring and/or damper arrangements 306 and 307 are indirectly connected to the load carrying structure 305 via the chassis component 311 in a position above or beside said frame structure 302. In this way the load impact on the frame beams can be significantly reduced.

Fig. 4 shows a rear portion of a truck according to an embodiment of the invention where the load carrying structure is a console structure 405 for a functional device such as a lift device. As can be seen in the Fig. 4, the spring and/or damper arrangement 406 and 407 are connected to the load carrying structure 405 via the upper portions 413a and 413b of the chassis component 411. Further, the spring and/or damper arrangement 406 and 407 are connected to the wheel hubs 403a and 403b. The main portion 412 of the chassis component 411 is connected to the frame beams 402a and 402b. Hence, the spring and/or damper arrangements 406 and 407 are indirectly connected to the load carrying structure 405 via the chassis component 411 in a position above or beside said frame structure 402. In this way the load impact on the frame beams can be significantly reduced.

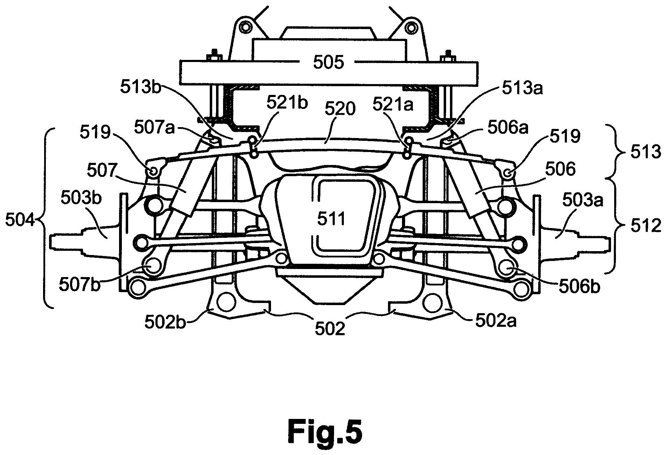

Fig. 5 shows a rear portion of a further embodiment of the invention, where the load carrying structure is a console structure 505. The embodiment shows an example of using springs and dampers as separate components. As can be seen in the Fig. 5, damper arrangements 506 and 507 are connected to the load carrying structure 505 via the upper portions 513a and 513b of the chassis component 511. The dampers 506 and 507 may for example be hydraulic dampers. Further, the damper arrangements 506 and 507 are connected to the wheel hubs 503a and 503b. The main portion 512 of the chassis component 511 is connected to the frame beams 502a and 502b.

Hence, the damper arrangements 506 and 507 are indirectly connected to the load carrying structure 405 in a position above or beside said frame structure 402. In Fig. 5, the wheel hub/inner wheel support of each wheel 503a and 503b has been prolonged in height direction and comprises connection points 519 for a first leaf spring 520 on its upper part. The first leaf spring 520 thereby is positioned in a transverse direction in relation to the longitudinal frame beams 502a and 502b. The first leaf spring 520 supports the chassis component 511 on its upper portion 513. In order to support the chassis component 511, connection elements 521a and 521b are provided on the chassis component 511, which movably attaches the leaf spring to the chassis component. Hydraulic dampers 506 and 507 are arranged between the upper portions 513a and 513b and the wheels 503a and 503b. Hence, in this embodiment, the spring and/or damper arrangement comprise a transverse leaf spring 520 and the dampers 506 and 507. It should be noted that is possible to include further transverse leaf springs in this embodiment of the invention. For example, it would be possible to use a second transversely positioned leaf spring which is arranged between a lower part of the wheel hub and a lower part of the chassis component. It should be noted that also longitudinal positioning of one or more leaf springs could be possible without deviating from the concept of the invention.

The frame beams 102a and 102b, 202a and 202b may alternatively be arranged with a small distance to each other so that a centrally positioned frame member is formed. It is also possible to use one tube-shaped longitudinal beam. Such central frame member 102 and 202 provides for a completely different way of packaging components/units of the vehicle, where components can be packed not only between, but also along the outside of the frame rails. The combination of the chassis component 111 and 211 with a central frame member is advantageous since the packaging possibilities are optimized. Further, the chassis component may function as an extension of the frame structure and may include different functional components.

It has been found particularly advantageous to use the chassis component according to the invention for an individual rear wheel suspension as significant improvement in rolling may be achieved. By using an individual wheel suspension for the driven rear wheels, the propeller shaft does not need as much space in vertical direction as for propeller shafts for rigid axles. Therefore, a central frame member may be formed as an elongated housing for the propeller shaft. Therefore, the chassis component may be formed as an integral part of the housing of the propeller shaft and a differential unit. Vehicular components may be packed in boxes surrounding the housing of the propeller shaft.

Advantageously, the chassis component is applied in combination with spring and/or damper arrangements having an inclined angle in relation to the height of the vehicle. Spring and/or damper arrangements with such inclined angle have proven to give an additional advantageous contribution to the anti-roll effect.

In conclusion, many different embodiments of the invention are possible, in particular with regards to the amount, exact positioning, and choice of spring/damper arrangements and the design of the chassis component. It should be noted that the invention is not limited to a rear wheel pair but can be applied to any wheel pair positioned between the front and rear wheels. Further the type of individual wheels suspension may be varied including for example the type and amount of wheel suspension rods. Therefore, the invention is applicable for many different types of heavy vehicles. For example, the vehicle may be provided with functional units as load carrying structure. Hence, the load carrying structure 105, 205, 305, 405 and 505 may be any on-built unit which is arranged in direct or indirect connection with the spring and/or damper arrangements according to claim 1. Therefore, the invention is applicable both in trucks for transportation of goods and for tractors having a fifth wheel for hauling a trailer. Also, the invention is applicable for several other types of heavy vehicles for example special vehicles, such as vehicles provided with construction equipment like a digger unit; or a rescue vehicle such as a fire-fighting vehicle etc.

## Claims

1. A chassis component (111, 211) for a heavy vehicle having a frame structure (102, 202), comprising two spaced, longitudinal frame beams, and a load carrying structure (105, 205) configured for carrying a load applied to the vehicle, wherein
the chassis component (111, 211) comprises a body, having a main portion (112, 212) and an upper portion (113, 213) mounted on top of the main portion (112, 212), said main portion (112, 212) being connectable to the frame structure (102, 202);
the main portion (112, 212) is arranged to be connected to the frame structure (102, 202), for forming a transverse cross-member connecting the frame beams; and
the upper portion (113, 213) is configured for being connected to the load carrying structure (105, 205), **characterized in that**
the upper portion (113, 213) comprises one or more connection points (114, 214) for connecting the upper portion (113, 213) to one or more spring and/or damper arrangements (106,107, 206, 207) for an individual suspension of a rear wheel pair (103a, 103b, 203a, 203b) of the heavy vehicle so that, when the chassis component is connected to the heavy vehicle, at least a part of a load from the load carrying structure will be distributed to a wheel of said spring and/or damper arrangements bypassing the frame structure.

2. The chassis component according to claim 1, **characterized in that** the chassis component (111, 211) is configured for being mounted between two longitudinal frame beams in a rear portion of the frame structure (102, 202).

3. The chassis component according to claim 1 or 2, **characterized in that** the main portion (112, 212) is configured to form an extension of the frame structure (102, 202) in its longitudinal direction when it is connected to the frame structure (102, 202).

4. The chassis component according to any one of the preceding claims, **characterized in that** said upper portion (213) is formed as two or more upwards and/or outwards extending portions (213a, 213b), which each are adapted for being connected to a spring and or damper arrangement (206, 207) and for being connected to a load carrying structure (205).

5. The chassis component according to any one of the preceding claims, **characterized in that** said chassis component (111, 211) comprises a hollow space.

6. The chassis component according to claim 5, **characterized in that** said hollow space is configured for housing one or more functional units.

7. The chassis component according to claim 6, **characterized in that** said hollow space is adapted for at least part of a power transmission means, such as a at least part of a propeller shaft, a gear box, a differential unit and/or a drive unit such as hydraulic engine or an electric engine.

8. The chassis component according to any one of the preceding claims, **characterized in that** two opposite positioned side walls (120, 220) of said main portion (212) of said body is provided with holes for individual drive axles (209a, 209b) to said wheels in said wheel pair (203a,203b).

9. The chassis component according to any one of the preceding claims, **characterized in that** a front wall (121, 221) of said main portion (112, 212) of said body is provided with a hole (123,223) for a propeller shaft (118, 218).

10. The chassis component according to any one of the preceding claims, **characterized in that** a rear wall (122, 222) of said main portion (112, 212) of said body is provided with a hole for a propeller shaft.

11. The chassis component according to any one of the preceding claims, **characterized in that** a rear wall (122, 222) of said main portion (112, 212) comprises connection points for a gear box.

12. The chassis component according to any one of the preceding claims, **characterized in that** said two opposite positioned side walls (120, 220) of said main portion, each comprise connection points for at least one wheel suspension rod (110a, 110b, 210a, 210b).

13. The chassis component according to any one of the preceding claims, **characterized in that** said main portion (112, 212) is formed as one body, and said upper portions (113, 213a, 213b) are connected by connecting elements to said main portion (212).

14. A truck comprising a chassis component according to claims 1-13.

15. A tractor for a tractor-trailer combination comprising a chassis component (111, 211) according to claims 1-14.

## Patentansprüche

1. Chassis-Komponente (111, 211) für ein Schwerfahrzeug, das eine Rahmenstruktur (102, 202) aufweist, umfassend zwei beabstandete, längsgerichtete Rahmenträger, und eine Last-tragende Struktur (105, 205), die zum Tragen einer auf das Fahrzeug aufgebrachten Last konfiguriert ist, wobei
die Chassis-Komponente (111, 211) einen Körper umfasst, der einen Hauptabschnitt (112, 212) und einen oben an dem Hauptabschnitt (112, 212) montierten oberen Abschnitt (113, 213) aufweist, wobei der Hauptabschnitt (112, 212) mit der Rahmenstruktur (102, 202) verbindbar ist;
der Hauptabschnitt (112, 212) dazu angeordnet ist, mit der Rahmenstruktur (102, 202) verbunden zu sein, um ein transversales Querelement zu bilden, das die Rahmenträger verbindet; und
der obere Abschnitt (113, 213) dazu konfiguriert ist, mit der Last-tragenden Struktur (105, 205) verbunden zu sein, **dadurch gekennzeichnet, dass**
der obere Abschnitt (113, 213) einen oder mehr Verbindungspunkte (114, 214) zum Verbinden des oberen Abschnitts (113, 213) mit einer oder mehr Feder- und/oder Dämpferanordnungen (106, 107, 206, 207) für eine individuelle Aufhängung eines Hinterradpaars (103a, 103b, 203a, 203b) des Schwerfahrzeugs umfasst, so dass, wenn die Chassis-Komponente mit dem Schwerfahrzeug verbunden ist, wenigstens ein Teil einer Last von der Last-tragenden Struktur auf ein Rad der Feder- und/oder Dämpferanordnungen verteilt ist, die die Rahmenstruktur umgehen.

2. Chassis-Komponente nach Anspruch 1, da **durch gekennzeichnet**, dass die Chassis-Komponente (111, 211) dazu konfiguriert ist, zwischen zwei längsgerichteten Rahmenträgern in einem hinteren Abschnitt der Rahmenstruktur (102, 202) montiert zu sein.

3. Chassis-Komponente nach Anspruch 1 oder 2, da **durch gekennzeichnet**, dass der Hauptabschnitt (112, 212) dazu konfiguriert ist, eine Erstreckung der Rahmenstruktur (102, 202) in ihrer Längsrichtung zu bilden, wenn er mit der Rahmenstruktur (102, 202) verbunden ist.

4. Chassis-Komponente nach einem der vorhergehenden Ansprüche, **dadurch gekennzeichnet, dass** der obere Abschnitt (213) als zwei oder mehr sich nach oben und/oder nach außen erstreckende Abschnitte (213a, 213b) gebildet ist, die jeweils daran angepasst sind, mit einer Feder- und/oder Dämpferanordnungen (206, 207) verbunden zu sein und mit einer Last-tragenden Struktur (205) verbunden zu sein.

5. Chassis-Komponente nach einem der vorhergehenden Ansprüche, **dadurch gekennzeichnet, dass** die Chassis-Komponente (111, 211) einen Hohlraum umfasst.

6. Chassis-Komponente nach Anspruch 5, **dadurch gekennzeichnet, dass** der Hohlraum dazu konfiguriert ist, eine oder mehr funktionelle Einheiten aufzunehmen.

7. Chassis-Komponente nach Anspruch 6, **dadurch gekennzeichnet, dass** der Hohlraum für wenigstens einen Teil einer Leistungsübertragungseinrichtung angepasst ist, wie etwa einen Teil einer Antriebswelle, eines Getriebes, einer Differentialeinheit und/oder einer Antriebseinheit, wie etwa eines Hydraulikmotors oder eines Elektromotors.

8. Chassis-Komponente nach einem der vorhergehenden Ansprüche, **dadurch gekennzeichnet, dass** zwei gegenüberliegend positionierte Seitenwände (120, 220) des Hauptabschnitts (212) des Körpers mit Löchern für individuelle Antriebsachsen (209a, 209b) zu den Räder in dem Radpaar (203a, 203b) versehen sind.

9. Chassis-Komponente nach einem der vorhergehenden Ansprüche, **dadurch gekennzeichnet, dass** eine vordere Wand (121, 221) des Hauptabschnitts (112, 212) des Körpers mit einem Loch (123, 223) für eine Antriebswelle versehen ist.

10. Chassis-Komponente nach einem der vorhergehenden Ansprüche, **dadurch gekennzeichnet, dass** eine hintere Wand (122, 222) des Hauptabschnitts (112, 212) des Körpers mit einem Loch für eine Antriebswelle versehen ist.

11. Chassis-Komponente nach einem der vorhergehenden Ansprüche, **dadurch gekennzeichnet, dass** eine hintere Wand (122, 222) des Hauptabschnitts (112, 212) Verbindungspunkte für ein Getriebe umfasst.

12. Chassis-Komponente nach einem der vorhergehenden Ansprüche, **dadurch gekennzeichnet, dass** die zwei gegenüberliegend positionierten Seitenwände (120, 220) des Hauptabschnitts (112, 212) jeweils Verbindungspunkte für wenigstens eine Radaufhängungsstange (110a, 110b, 210a, 210b) umfassen.

13. Chassis-Komponente nach einem der vorhergehenden Ansprüche, **dadurch gekennzeichnet, dass** der Hauptabschnitt (112, 212) als ein Körper gebildet ist, und die oberen Abschnitte (113, 213a, 213b) durch Verbinden von Elementen mit dem Hauptabschnitt (212) verbunden sind.

14. Lastwagen umfassend eine Chassis-Komponente nach den Ansprüchen 1-13.

15. Zugmaschine für eine Zugmaschinen-Anhänger-Kombination umfassend eine Chassis-Komponente (111, 211) nach den Ansprüchen 1-14.

## Revendications

1. Composant de châssis (111, 211) pour un véhicule lourd ayant une structure de cadre (102, 202), comprenant deux poutres de cadre longitudinales espacées et une structure porteuse de charge (105, 205) configurée pour porter une charge appliquée au véhicule, dans lequel
le composant de châssis (111, 211) comprend un corps, ayant une partie principale (112, 212) et une partie supérieure (113, 213) montée au-dessus de la partie principale (112, 212), ladite partie principale (112, 212) étant connectable à la structure de cadre (102, 202) ;
la partie principale (112, 212) est agencée pour être connectée à la structure de cadre (102, 202), pour former une traverse transversale reliant les poutres de cadre ; et
la partie supérieure (113, 213) est configurée pour être connectée à la structure porteuse de charge (105, 205), **caractérisé en ce que**
la partie supérieure (113, 213) comprend un ou plusieurs point(s) de connexion (114, 214) pour connecter la partie supérieure (113, 213) à un ou plusieurs agencement(s) de ressort et/ou d'amortisseur (106, 107, 206, 207) pour une suspension individuelle d'une paire de roues arrière (103a, 103b, 203a, 203b) du véhicule lourd de sorte que, lorsque le composant de châssis est connecté au véhicule lourd, au moins une partie d'une charge de la structure porteuse de charge soit répartie sur une roue desdits agencements de ressort et/ou d'amortisseur contournant la structure de cadre.

2. Composant de châssis selon la revendication 1, **caractérisé en ce que** le composant de châssis (111, 211) est configuré pour être monté entre deux poutres de cadre longitudinales dans une partie arrière de la structure de cadre (102, 202).

3. Composant de châssis selon la revendication 1 ou 2, **caractérisé en ce que** la partie principale (112, 212) est configurée pour former une extension de la structure de cadre (102, 202) dans sa direction longitudinale lorsqu'elle est reliée à la structure de cadre (102, 202).

4. Composant de châssis selon l'une quelconque des revendications précédentes, **caractérisé en ce que** ladite partie supérieure (213) est formée de deux parties ou plus s'étendant vers le haut et/ou vers l'extérieur (213a, 213b), qui sont chacune adaptées pour être reliées à un agencement de ressort et/ou d'amortisseur (206, 207) et pour être reliées à une structure porteuse de charge (205).

5. Composant de châssis selon l'une quelconque des revendications précédentes, **caractérisé en ce que** ledit composant de châssis (111, 211) comprend un espace creux.

6. Composant de châssis selon la revendication 5, **caractérisé en ce que** ledit espace creux est configuré pour recevoir une ou plusieurs unité(s) fonctionnelle(s).

7. Composant de châssis selon la revendication 6, **caractérisé en ce que** ledit espace creux est adapté pour au moins une partie d'un moyen de transmission de puissance, tel qu'au moins une partie d'un arbre d'hélice, d'une boîte de vitesses, d'une unité de différentiel et/ou d'une unité d'entraînement tel qu'un moteur hydraulique ou un moteur électrique.

8. Composant de châssis selon l'une quelconque des revendications précédentes, **caractérisé en ce que** deux parois latérales positionnées de manière opposée (120, 220) de ladite partie principale (212) dudit corps sont pourvues de trous pour des essieux moteurs individuels (209a, 209b) auxdites roues dans ladite paire de roues (203a, 203b).

9. Composant de châssis selon l'une quelconque des revendications précédentes, **caractérisé en ce qu'**une paroi avant (121, 221) de ladite partie principale (112, 212) dudit corps est pourvue d'un trou (123, 223) pour un arbre d'hélice (118, 218).

10. Composant de châssis selon l'une quelconque des revendications précédentes, **caractérisé en ce qu'**une paroi arrière (122, 222) de ladite partie principale (112, 212) dudit corps est pourvue d'un trou pour un arbre d'hélice.

11. Composant de châssis selon l'une quelconque des revendications précédentes, **caractérisé en ce qu'**une paroi arrière (122, 222) de ladite partie principale (112, 212) comprend des points de connexion pour une boîte de vitesses.

12. Composant de châssis selon l'une quelconque des revendications précédentes, **caractérisé en ce que** chacune desdites deux parois latérales positionnées de manière opposée (120, 220) de ladite partie principale comprend des points de connexion pour au moins une tige de suspension de roue (110a, 110b, 210a, 210b).

13. Composant de châssis selon l'une quelconque des revendications précédentes, **caractérisé en ce que** ladite partie principale (112, 212) est formée comme un seul corps et lesdites parties supérieures (113, 213a, 213b) sont reliées par des éléments de connexion à ladite partie principale (212).

14. Camion comprenant un composant de châssis selon les revendications 1 à 13.

15. Tracteur pour une combinaison tracteur-remorque comprenant un composant de châssis (111, 211) selon les revendications 1 à 14.
